# EUROPEAN PATENT SPECIFICATION

(11) **EP 4 483 058 B1**
(45) Date of publication and mention of the grant of the patent: **07.10.2026**
(21) Application number: 23713006.7
(22) Date of filing: 22.02.2023
(51) Int. Cl.: F04B 43/02, F04B 53/10, F04B 53/16, F04B 11/00, F16K 15/04

(54) **DIAPHRAGM PUMP WITH OFF-SET BALL CHECK VALVE AND ELBOW CAVITY**
MEMBRANPUMPE MIT VERSETZTEM KUGELRÜCKSCHLAGVENTIL UND BOGENFÖRMIGEM HOHLRAUM
POMPE À MEMBRANE AVEC CLAPET ANTI-RETOUR À BILLE DÉCALÉ ET CAVITÉ À COUDE

(30) Priority: 22.02.2022 US 202263312513 P; 18.04.2022 US 202263331980 P
(43) Date of publication of application: 01.01.2025
(73) Proprietor: Warren Rupp, Inc., Mansfield, OH 44902 (US)
(72) Inventor: MORRIS, Brent, Mansfield, Ohio 44902 (US); FRYE, Mark, Mansfield, Ohio 44902 (US); ROCKWELL, Jim, Mansfield, Ohio 44902 (US)
(74) Representative: Warren, Caroline Elisabeth
(86) International application number: PCT/US2023/062977
(87) International publication number: WO 2023/164450

(56) References cited:
- EP-A1- 2 728 189
- EP-A1- 3 809 026
- WO-A1-2020/247442
- US-A1- 2009 196 779
- US-A1- 2015 226 192
- US-B1- 6 830 441

## Description

### BACKGROUND

Fluid-operated pumps, such as diaphragm pumps, are widely used particularly for pumping liquids, solutions, viscous materials, slurries, suspensions or flowable solids. Double diaphragm pumps are well known for their utility in pumping viscous or solids-laden liquids, as well as for pumping plain water or other liquids, and high or low viscosity solutions based on such liquids. Accordingly, such double diaphragm pumps have found extensive use in pumping out sumps, shafts, and pits, and generally in handling a great variety of slurries, sludges, and waste-laden liquids. Fluid driven diaphragm pumps offer certain further advantages in convenience, effectiveness, portability, and safety. Double diaphragm pumps are rugged and compact and, to gain maximum flexibility, are often served by a single intake line and deliver liquid through a short manifold to a single discharge line.

Although known diaphragm pumps work well for their intended purpose, several disadvantages exist. For example, air operated double diaphragm (AODD) pumps typically use a check valve *(e.g.,* a ball or flap) to control the flow of fluid inside one or more diaphragm chambers of the pump. Operation of a pump leads to rapid acceleration and deceleration of the fluid being pumped and results in corresponding changes in pressure. This change in pressure can produce cavitation that reduces fluid capacity in the flow area. Collapse of cavitation cavities can wear down parts of the pump and decrease the life of the pump or time between servicing the pump.

Further, in pumps that utilize ball check valves, the ball moves from a seated position into an unseated position to allow flow and then re-seats into the seated position to stop/prevent flow. Guidance finger structures confine the ball to a ball check valve region of the pump for efficient seating and unseating. The guidance fingers are configured to keep the ball centered in the ball check valve region during unseating. However, the rapid flow of the fluid causes the ball to jostle and continuously collide with the guidance finger structures. These collisions cause noise pollution and erosion to the ball and guidance finger structures, which respectively may cause hearing damage to operators and reduce the lifetime of the ball check valve and thus, overall pump. This erosion is worsened when flowable solids are used and get trapped between the guidance finger structures and the ball. Therefore, there may be a need for an improved ball check valve design for diaphragm pumps to solve at least the above-mentioned issues.

US-B1-6830441 discloses a valve for a downhole pump. US-A1-2009/196779 discloses a bypass valve and downhole pump. US-A1-2015/226192 discloses an electric drive system for a pulseless positive displacement pump. WO-A1-2020/247442 discloses a diaphragm pump drive for an electric pump.

### SUMMARY

Aspects of the invention are set out in the independent claim and preferred features are set out in the dependent claims. This Summary is provided to introduce a selection of concepts in a simplified form that are further described below in the Detailed Description. This Summary is not intended to identify key factors or essential features of the claimed subject matter, nor is it intended to be used to limit the scope of the claimed subject matter.

In one implementation a diaphragm pump may comprise a valve inlet portion elongated in a first direction along a longitudinal axis. A valve outlet portion may be coupled to the valve inlet portion, and a ball check valve may be arranged between the valve inlet portion and the valve outlet portion. The ball check valve may comprise a sealing ring arranged over the valve inlet portion. The sealing ring has an inner diameter that is smaller than an inner diameter of the valve inlet portion. The ball check valve may also comprise a ball arranged over the sealing ring. The diameter of the ball may be greater than the inner diameter of the sealing ring.

The ball of the ball check valve may be configured to move between a seated position to prevent fluid flow between the valve inlet and valve outlet portions and an unseated position to allow fluid flow between the inlet and outlet portions. A central axis of the ball extends through the center of the ball in the first direction. The central axis may be coincident with the longitudinal axis when the ball is in the seated position, whereas when the ball is in the unseated position, the central axis may be offset from the longitudinal axis.

To the accomplishment of the foregoing and related ends, the following description and annexed drawings set forth certain illustrative aspects and implementations. These are indicative of but a few of the various ways in which one or more aspects may be employed. Other aspects, advantages and novel features of the disclosure will become apparent from the following detailed description when considered in conjunction with the annexed drawings.

### BRIEF DESCRIPTION OF THE DRAWINGS

What is disclosed herein may take physical form in certain parts and arrangement of parts, and will be described in detail in this specification and illustrated in the accompanying drawings which form a part hereof and wherein:
FIGURE 1 illustrates a perspective view of some implementations of a diaphragm pump.
FIGURE 2 illustrates a cross-sectional view of the diaphragm pump of FIGURE 1 that shows some implementations of a ball check valve as described herein.
FIGURE 3A illustrates a cross-sectional view of a ball of a ball check valve that is in a seated position as described herein.
FIGURE 3B illustrates a cross-sectional view of a ball of a ball check valve that is in an unseated position as described herein.
FIGURE 4 illustrates a cross-sectional view of another implementation of a diaphragm pump during operation.
FIGURE 5A illustrates a cross-sectional view that corresponds to FIGURE 3A of some implementations of the ball in the seated position as described herein.
FIGURE 5B illustrates a cross-sectional view that corresponds to FIGURE 3A of some implementations of the ball in the unseated position as described herein.
FIGURE 6A illustrates a perspective view of some implementations of a ball in a seated position within a sealing ring as described herein.
FIGURE 6B illustrates a perspective view of some implementations of a ball in an unseated position within a sealing ring as described herein.
FIGURES 7A, 7B, and 7C illustrate various views of a guidance finger structure for a ball check valve as described herein.
FIGURES 8A, 8B, 8C, and 8D illustrate various cross-sectional views of an exemplary fluid flow path through a ball check valve as described herein.
FIGURE 9 illustrates a cross-sectional view of some implementations of an inlet elbow comprising an elbow inlet cavity to reduce cavitation.

### DETAILED DESCRIPTION

The claimed subject matter is now described with reference to the drawings, wherein like reference numerals are generally used to refer to like elements throughout. In the following description, for purposes of explanation, numerous specific details are set forth in order to provide a thorough understanding of the claimed subject matter. It may be evident, however, that the claimed subject matter may be practiced without these specific details. In other instances, structures and devices are shown in block diagram form in order to facilitate describing the claimed subject matter.

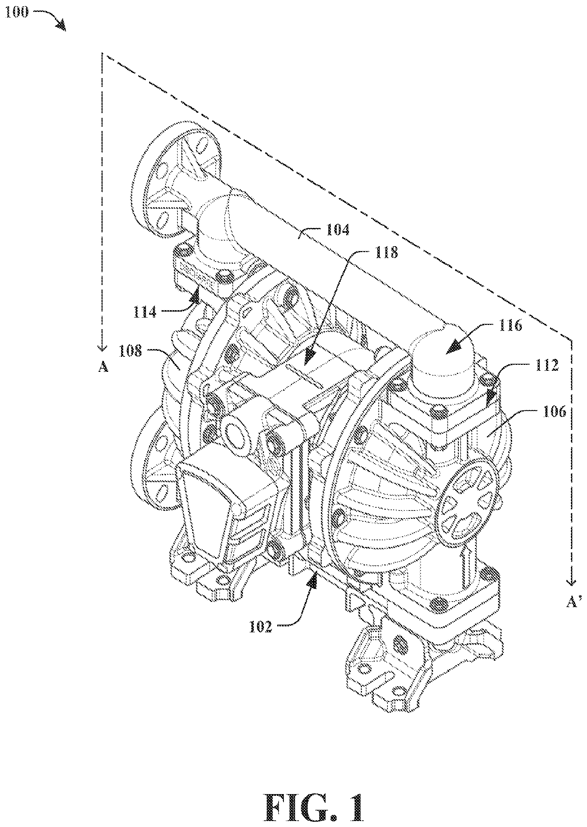

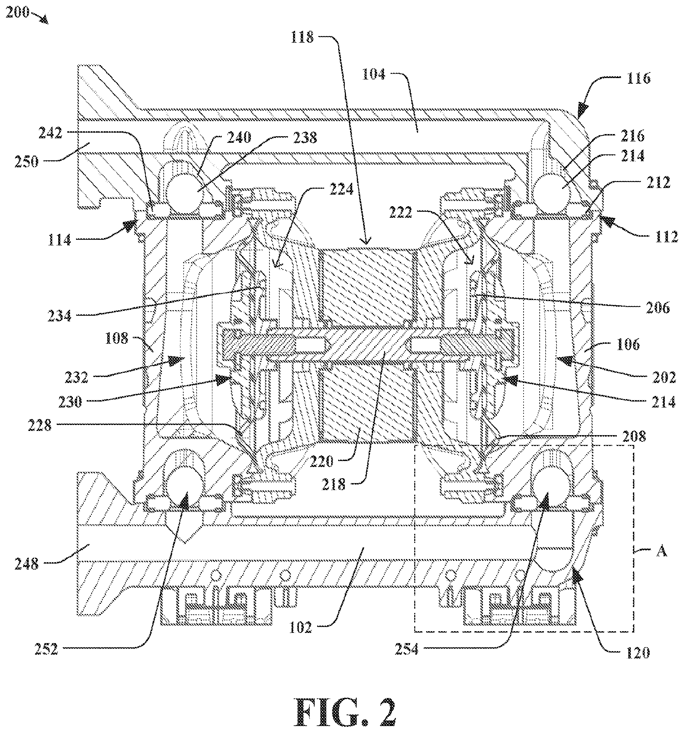

FIGURES 1 and 2 will be described together. FIGURE 1 illustrates a perspective view 100 of some implementations of an exemplary diaphragm pump, and FIGURE 2 illustrates a cross-sectional view 200 of the exemplary diaphragm pump of FIGURE 1. The cross-sectional view 200 of FIGURE 2 may correspond to cross-section line AA' of FIGURE 1.

The diaphragm pump may comprise a main inlet portion 102, a main outlet portion 104, a first diaphragm chamber housing 106, a second diaphragm chamber housing 108, and a center section 118 disposed between the first and second diaphragm chamber housings 106, 108. The first diaphragm chamber housing 106 may include a first diaphragm assembly 214 comprising a first diaphragm 208 and a first diaphragm plate 206. The first diaphragm 208 may be coupled to the first diaphragm plate 206 and may extend across the first diaphragm chamber housing 106, thereby forming a movable wall defining a first pumping chamber 202 and a first diaphragm chamber 222. The second diaphragm chamber housing 108 may include a second diaphragm assembly 230 comprising a second diaphragm 228 and a second diaphragm plate 234. The second diaphragm 228 may be coupled to the second diaphragm plate 234 and may extend across the second diaphragm chamber housing 108, thereby forming a movable wall defining a second pumping chamber 232 and a second diaphragm chamber 224. The center section 118 may comprise a valve region 220 and a connecting rod 218 that may be operatively connected to and extend between the first and second diaphragm plates 206, 234.

During operation of the diaphragm pump, a pump entry inlet 248 may receive the fluid that is pumped through the main inlet portion 102 and into the first or second pumping chambers 202, 232. The pump may comprise lower ball check valves 252, 254 that selectively open or close to allow the fluid to travel into the first and/or second pumping chambers 202, 232. Once fluid is in the first pumping chamber 202, the fluid can be pumped into the main outlet portion 104. From the main outlet portion 104, the fluid may then travel out of the diaphragm pump through a pump exit outlet 250.

A first ball check valve 112 controls fluid flow from the first pumping chamber 202 into the main outlet portion 104. The first ball check valve 112 may be arranged at an upper elbow region 116 of the diaphragm pump. In some implementations, the first ball check valve 112 may comprise a first sealing ring 212, a first ball 204, and a first angled guidance finger structure 216. Once fluid is in the first pumping chamber 202, the fluid can be pumped into the main outlet portion 104. A second ball check valve 114 controls fluid flow from the second pumping chamber 232 into the main outlet portion 104. In some implementations, the second ball check valve 114 may comprise a second sealing ring 242, a second ball 238, and a second angled finger structure 240.

The first and second ball check valves 112, 114 are in a seated position in FIGURE 2, wherein the upper balls 204, 238 may be arranged within openings in the sealing rings 212, 242 such that fluid cannot flow into the main outlet portion 104 from the pumping chambers 202, 232. As will be described further herein, the first and second ball check valves 112, 114 may be in an unseated position when the upper balls 204, 238 move away from the sealing rings 212, 242 and toward the main outlet portion 104. When in the unseated position, the upper balls 204, 238 are configured to be off-center from the lower balls of the lower ball check valves 252, 254 to control the location of the upper balls 204, 238, which reduces erosion to the ball check valves 112, 114, reduces time for the ball check valves 112, 114 to switch between the seated position and the unseated position, and reduces noise pollution produced by the ball check valves 112, 114.

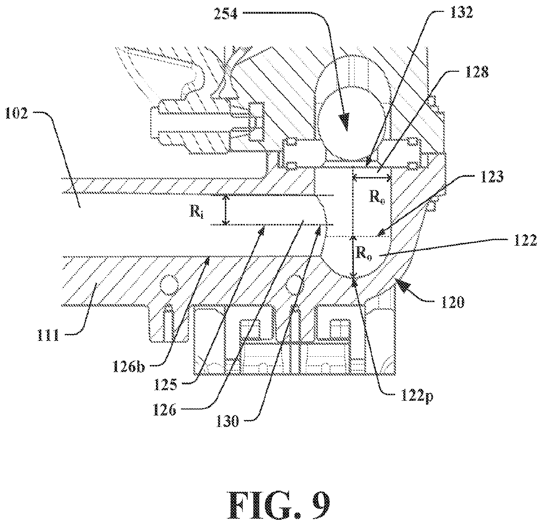

The first lower ball check valve 254 is arranged at a lower elbow region 120 of the diaphragm pump. In some embodiments, the configuration of the lower elbow region 120 of the diaphragm pump reduces cavitation and further improves the durability of the diaphragm pump. This configuration of the lower elbow region 120 will be discussed further herein with respect to FIG. 9, which corresponds to a magnified portion of the lower elbow region 120 outlined by Box A of FIG. 2.

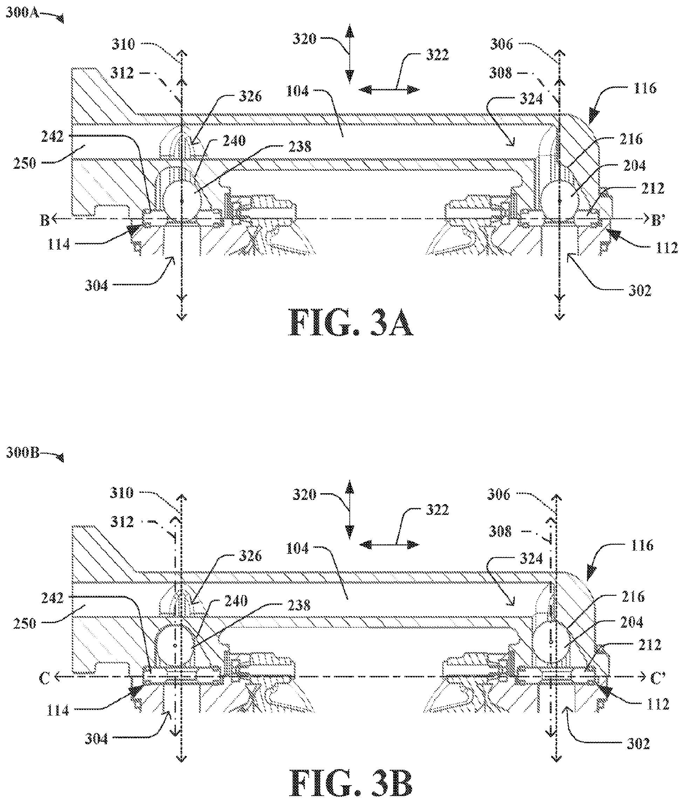

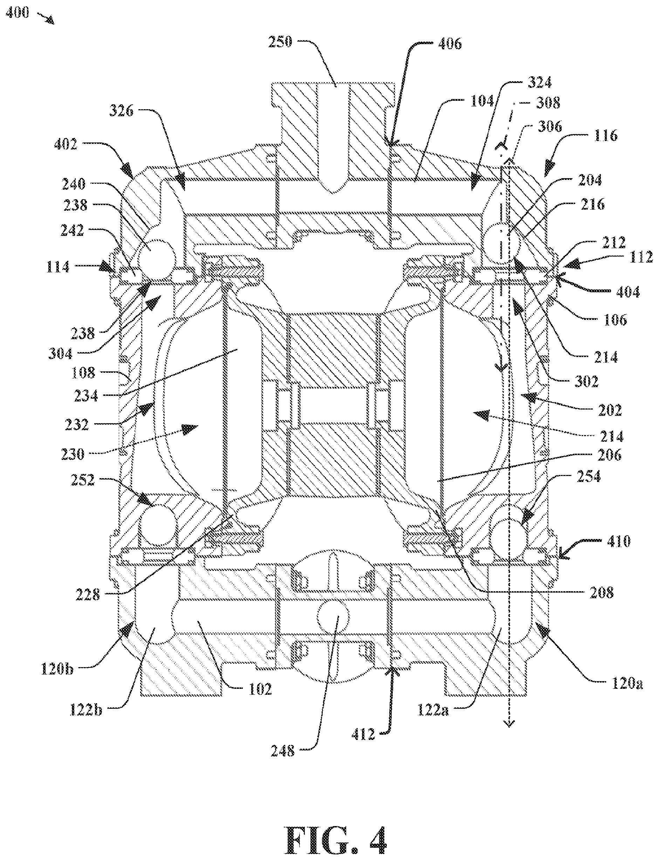

Referring now to FIGURE 3A, FIGURE 3A illustrates magnified view 300A of some implementations of the first and second ball check valves 112, 114 in the diaphragm pump. In FIGURE 3A, the first and second ball check valves 112, 114 are in the seated position to prevent fluid flow into the main outlet portion 104 from the first and second pumping chambers 202, 232 of FIGURE 2. It will be appreciated that FIGURE 3A is for illustrative purposes only because often, the first and second ball check valves 112, 114 are not in the seated position at the same time during operation, as will be explained further with respect to FIGURE 4.

In some implementations, fluid can flow through the first ball check valve 112 from a first valve inlet portion 302 of the diaphragm pump and into a first valve outlet portion 324. The first valve inlet portion 302 is an upper portion of the first pumping chamber 202 of FIGURE 2 defined by a pump housing. The first valve inlet portion 302 is elongated in a first direction 320 along a first longitudinal axis 306. In some implementations, fluid flows through the main outlet portion 104 in a second direction 322 to leave the diaphragm pump through the pump exit outlet 250. The first valve outlet portion 324 is a region of the main outlet portion 104 that extends in the second direction 322 and is arranged after the first ball check valve 112. In some implementations, the first direction 320 is perpendicular to the second direction 322. In some implementations, the first valve inlet portion 302 is a cylindrical pathway such that the first longitudinal axis 306 extends through the center of the cylindrical pathway. In other implementations, the first valve inlet portion 302 may be a square-like, oval-like, or some other shaped pathway, wherein the first longitudinal axis 306 extends through a center of the pathway.

In some implementations, the first sealing ring 212 is arranged over the first valve inlet portion 302 and comprises an opening that has a smaller diameter than an inner diameter of the first valve inlet portion 302. When the first ball check valve 112 is in the seated position as shown in FIGURE 3A, the first ball 204 fits within the opening of the first sealing ring 212 such that the first ball 204 seals the first sealing ring 212. When the first ball 204 is in the seated position, fluid cannot flow through the first ball check valve 112 and between the first valve inlet portion 302 and the first valve outlet portion 324. In some implementations, the first ball 204 is a sphere and comprises a flexible material such as rubber, for example, such that the first ball 204 can slightly conform to the opening of the first sealing ring 212 to provide a reliable seal between the first valve inlet portion 302 and the main outlet portion 104. The first ball 204 has a first central axis 308 that extends in the first direction 320 and intersects with a center of the first ball 204. When the first ball check valve 112 is in the seated position, as illustrated in FIGURE 3A, the first central axis 308 is coincident with the first longitudinal axis 306.

In some implementations, fluid can flow through the second ball check valve 114 from a second valve inlet portion 304 of the diaphragm pump and into a second valve outlet portion 326. The second valve inlet portion 304 is an upper portion of the second pumping chamber 232 of FIGURE 2. The second valve inlet portion 304 is elongated in the first direction 320 along a second longitudinal axis 310. The second valve outlet portion 326 is a region of the main outlet portion 104 that extends in the second direction 322 and is arranged after the second ball check valve 114. In some implementations, the second valve inlet portion 304 is a cylindrical pathway such that the second longitudinal axis 310 extends through the center of the cylindrical pathway. In other implementations, the second valve inlet portion 304 may be a square-like, oval-like, or some other shaped pathway, wherein the second longitudinal axis 310 extends through a center of the pathway.

In some implementations, the second sealing ring 242 is arranged over the second valve inlet portion 304 and comprises an opening that has a smaller diameter than an inner diameter of the second valve inlet portion 304. When the second ball check valve 114 is in the seated position as shown in FIGURE 3A, the second ball 238 fits within the opening of the second sealing ring 242 such that the second ball 238 seals the second sealing ring 242. When the second ball 238 is in the seated position, fluid cannot flow through the second ball check valve 114 and between the second valve inlet portion 304 and the second valve outlet portion 326. In some implementations, the second ball 238 is a sphere and comprises a flexible material such as rubber, for example, such that the second ball 238 can slightly conform to the opening of the second sealing ring 242 to provide a reliable seal between the second valve inlet portion 304 and the main outlet portion 104. The second ball 238 has a second central axis 312 that extends in the first direction 320 and intersects with a center of the second ball 238. When the second ball check valve 114 is in the seated position, as illustrated in FIGURE 3A, the second central axis 312 is coincident with the second longitudinal axis 310.

FIGURE 3B illustrates magnified view 300B of some implementations of the first and second ball check valves 112, 114 in the diaphragm pump. In FIGURE 3B, the first and second ball check valves 112, 114 are in the unseated position to allow fluid flow into the main outlet portion 104 from the first and second pumping chambers (202, 232 of FIGURE 2). It will be appreciated that FIGURE 3B is for illustrative purposes only because often, the first and second ball check valves 112, 114 are not in the unseated position at the same time, as will be explained further with respect to FIGURE 4.

With reference to the first ball check valve 112 in FIGURE 3A, the first ball 204 is configured to move away from the first sealing ring 212 when the first ball check valve 112 changes from the seated position (*e.g*., FIGURE 3A) to the unseated position in FIGURE 3B. Therefore, in the unseated position, the first ball 204 no longer seals the first sealing ring 212, thereby allowing fluid to flow from the first valve inlet portion 302, through the first ball check valve 112, and into the first valve outlet portion 324. In the unseated position, the first ball 204 moves both in the first and second directions 320, 322 such that the first central axis 308 of the first ball 204 is offset from the first longitudinal axis 306 of the first valve inlet portion 302. In some implementations, the first angled guidance finger structure 216 guides the first ball 204 such that the first central axis 308 is offset from the first longitudinal axis 306. Further, in some such implementations, the first angled guidance finger structure 216 also confines the first ball 204 to stay within its position shown in FIGURE 3B during fluid flow from the first valve inlet portion 302 to the first valve outlet portion 324 and then the main outlet portion 104. Thus, the first ball 204 remains in a first ball check valve region of instead of entering into the first valve outlet portion 324 in the unseated position.

Because the first valve inlet portion 302 extends in the first direction 320 and the first valve outlet portion 324 extends in the second direction 322, as the fluid flows from the first valve inlet portion 302 to the first valve outlet portion 324, the fluid changes direction as it flows through the upper elbow region 116 of the diaphragm pump. The direction of the fluid flow through the first ball check valve 112 can be unpredictable due to the change in fluid flow direction through the upper elbow region 116 and due to the rapid change in fluid flow speed as the first ball check valve 112 switches between the seated and unseated positions. To prevent this variable fluid flow behavior from jostling the first ball 204, the first ball 204 is offset from the first longitudinal axis 306. Further, the first ball 204 is confined to this offset position which helps make the variable fluid flow behavior more predictable. The first ball 204 may be offset to the left in FIGURE 3B such that the first central axis 308 of the first ball 204 is arranged between the first longitudinal axis 306 and the pump exit outlet 250. By being offset to the left in FIGURE 3B, the drag from the fluid can be reduced and pressure above the first ball 204 can increase, which reduces the force that the first ball 204 has on the first ball check valve 112 when seating and unseating.

Because of the reduced jostling of the first ball 204 and more predictable fluid flow behavior in the first ball check valve 112, erosion to the first ball 204 and the first ball check valve 112 is reduced, time for the first ball check valve 112 to switch between the seated position and the unseated position is reduced, and noise pollution produced by the first ball check valve 112 is reduced. Therefore, the first ball check valve 112 in FIGURE 3B increases pump efficiency and pump lifetime. Further, in some implementations, the reduction in noise pollution of the first ball check valve 112 may cause the noise pollution of the diaphragm pump to drop below decibel levels requiring operators to wear ear protection. As such, ear protection may not be required, which improves comfort for pump operators and reduces risk hearing damage to pump operators.

With reference to the second ball check valve 114 in FIGURE 3A, the second ball 238 is configured to move away from the second sealing ring 242 when the second ball check valve 114 changes from the seated position (*e.g*., FIGURE 3A) to the unseated position in FIGURE 3B. Therefore, in the unseated position, the second ball 238 no longer seals the second sealing ring 242, thereby allowing fluid to flow from the second valve inlet portion 304, through the second ball check valve 114, and into the second valve outlet portion 326. In the unseated position, the second ball 238 moves both in the first and second directions 320, 322 such that the second central axis 312 of the second ball 238 is offset from the second longitudinal axis 310 of the second valve inlet portion 304. In some implementations, the second angled guidance finger structure 240 guides the second ball 238 such that the second central axis 312 is offset from the second longitudinal axis 310. Further, in some such implementations, the second angled guidance finger structure 240 also confines the second ball 238 to stay within its position shown in FIGURE 3B during fluid flow from the second valve inlet portion 304 to the second valve outlet portion 326 and then the main outlet portion 104.

Because the second valve inlet portion 304 extends in the first direction 320 and the second valve outlet portion 326 extends in the second direction 322, as the fluid flows from the second valve inlet portion 304 to the second valve outlet portion 326, the fluid changes direction. The direction of the fluid flow through the second ball check valve 114 can be unpredictable due to the change in fluid flow direction through the second ball check valve 114 and due to the rapid change in fluid flow speed as the second ball check valve 114 switches between the seated and unseated positions. To prevent this variable fluid flow behavior from jostling the second ball 238, the second ball 238 is offset from the second longitudinal axis 310. Further, the second ball 238 is confined to this offset position which helps make the variable fluid flow behavior more predictable. The second ball 238 may be offset to the left in FIGURE 3B such that the second central axis 312 of the second ball 238 is arranged between the second longitudinal axis 310 and the pump exit outlet 250. By being offset to the left in FIGURE 3B, the drag from the fluid can be reduced and pressure above the second ball 238 can increase, which reduces the force that the second ball 238 has on the second ball check valve 114 when seating and unseating.

Because of the reduced jostling of the second ball 238 and more predictable fluid flow behavior in the second ball check valve 114, erosion to the second ball check valve 114 is reduced, time for the second ball check valve 114 to switch between the seated position and the unseated position is reduced, and noise pollution produced by the second ball check valve 114 is reduced. Therefore, the second ball check valve 114 in FIGURE 3B increases pump efficiency and pump lifetime. Further, in some implementations, the reduction in noise pollution of the second ball check valve 114 may cause the noise pollution of the diaphragm pump to drop below decibel levels requiring operators to wear ear protection. As such, ear protection may not be required, which improves comfort for pump operators and reduces risk hearing damage to pump operators.

FIGURE 4 illustrates a cross-sectional view 400 of some implementations of a diaphragm pump during operation. As shown in FIGURE 4, in some implementations, when the first ball check valve 112 is in the unseated position, the second ball check valve 114 is in the seated position. When the first ball check valve 112 is in the unseated position, fluid is pumped from the first pumping chamber 202, through the first ball check valve 112, and is discharged into the main outlet portion 104. While the fluid is discharged into the main outlet portion 104 from the first ball check valve 112, the second ball check valve 114 is in the seated position such that fluid is suctioned into the second pumping chamber 232 from the main inlet portion 102. As the first ball check valve 112 returns to the seated position, the second ball check valve 114 will move into the unseated position such that the fluid in the second pumping chamber 232 can flow through the second ball check valve 114 and be discharged into the main outlet portion 104. During operation, to continuously pump fluid from the main inlet portion 102 and into the main outlet portion 104, the first ball check valve 112 continuously moves between the seated position and the unseated position as the second ball check valve 114 continuously moves between the unseated position and the seated position.

Further, it will be appreciated that when the first ball check valve 112 is in the unseated position, the first lower ball check valve 254 is in the seated position as shown in FIGURE 4; and when the first ball check valve 112 is in the seated position, the first lower ball check valve 254 is in the unseated position (not shown). Similarly, it will be appreciated that when the second ball check valve 114 is in the seated position, the second lower ball check valve 252 is in the unseated position as shown in FIGURE 4; and when the second ball check valve 114 is in the unseated position, the second lower ball check valve 252 is in the seated position (not shown).

In some implementations, the pump exit outlet 250 is arranged between the first and second ball check valves 112, 114. In some such implementations, an additional elbow region 402 may be arranged over the second ball check valve 114 such that fluid flows from the second valve inlet portion 304, through the second ball check valve 114, through additional elbow region 402, and into second valve outlet portion 326 and the main outlet portion 104. In the cross-sectional view 400 of FIGURE 4, the first angled guidance finger structure 216 and the second angled guidance finger structure 240 are configured to respectively push the first ball 204 and the second ball 238 laterally toward the pump exit outlet 250. Thus, in some implementations, when in the unseated position, the first longitudinal axis 306 is arranged between the first central axis 308 and the upper elbow region 116.

Similarly, in some implementations, the pump entry inlet 248 is arranged between the lower ball check valves 252, 254. In some such implementations, a first lower elbow region 120a is arranged below the first lower ball check valve 254, and a second lower elbow region 120b is arranged below the second lower ball check valve 252. As will be discussed further herein, in some implementations, the first and second lower elbow regions 120a, 120b respectively comprise first and second elbow inlet cavities 122a, 122b. The first and second elbow inlet cavities 122a, 122b reduce cavitation as fluid flows from the pump entry inlet 248 and through the first and second lower elbow regions 120a, 120b.

Further, in some embodiments, each elbow region (116, 402, 120a, 120b) may be selectively removable from and selectively attachable to other portions of the pump housing for maintenance and/or replacement of the elbow region (116, 402, 120a, 120b). For example, in some embodiments, the first upper elbow region 116 may be selectively removable at a first intersection 406 proximate housing of the pump exit outlet 250 and at a second intersection 404 proximate the first diaphragm chamber housing 106. At the first and second intersections 404, 406, the first upper elbow region 116 may be attached to the other housing of the pump by screws, o-rings, and/or other attachment fixtures such that leakage does not occur at the first or second intersections 404, 406. Similarly, for example, in some embodiments, the first lower elbow region 120a may be selectively removable at a third intersection 410 proximate the first diaphragm chamber housing 106 and at a second intersection 412 proximate housing of the pump entry inlet 248. At the third and fourth intersections 410, 412, the first lower elbow region 120a may be attached to the other housing of the pump by screws, o-rings, and/or other attachment fixtures such that leakage does not occur at the third or fourth intersections 410, 412. Thus, each elbow region (116, 402, 120a, 120b) may be selectively removed for service and/or replacement, thereby extending the lifetime of the pump. In some embodiments, one or more of the elbow regions (116, 402, 120a, 120b) may also be retrofitted to replace conventional elbow regions on an existing pump such that the existing pump may benefit from the reduced cavitation, reduced debris, improved fluid flow, reduced noise production, and reduced degradation provided by the one or more elbow regions (116, 402, 120a, 120b).

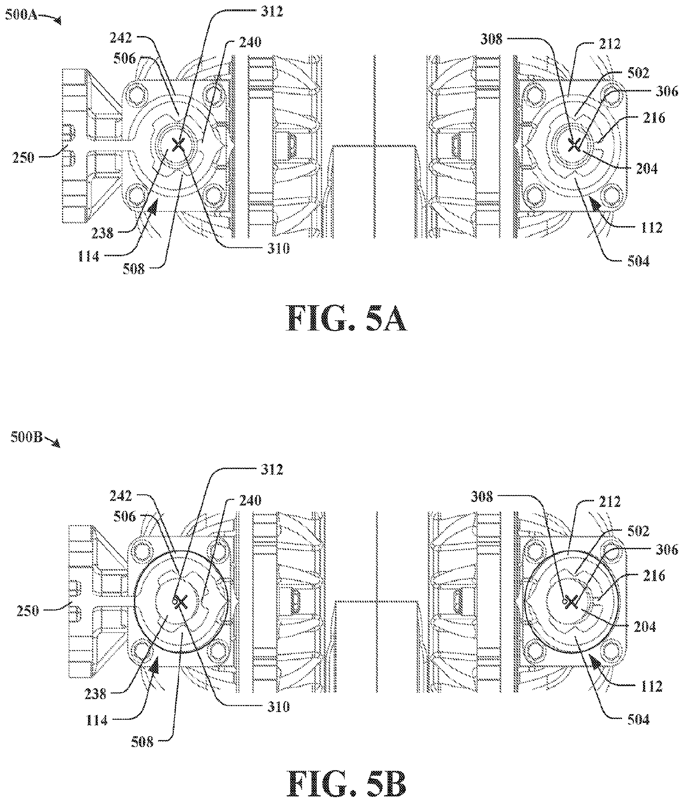

FIGURE 5A illustrates a cross-sectional view 500A of the first and second ball check valves 112, 114. Fluid flows into the page in FIGURE 5A. In some implementations, the cross-sectional view 500A corresponds with cross-section line BB' of FIGURE 3A. Thus, the first and second balls 204, 238 in FIGURE 5A are in the seated position.

In some implementations, the first ball check valve 112 further comprises a first guidance finger structure 502 and a second guidance finger structure 504 that protrude towards the first ball 204. The first and second guidance finger structures 502, 504 are configured to guide the first ball 204 into the unseated position while still allowing fluid to flow around the first ball 204. In some implementations, the first guidance finger structure 502, the second guidance finger structure 504, and the first angled guidance finger structure 216 are spaced apart from one another.

In some implementations, the second ball check valve 114 further comprises a third guidance finger structure 506 and a fourth guidance finger structure 508 that protrude towards the second ball 238. The third and fourth guidance finger structures 506, 508 are configured to guide the second ball 238 into the unseated position while still allowing fluid to flow around the second ball 238. In some implementations, the third guidance finger structure 506, the fourth guidance finger structure 508, and the second angled guidance finger structure 240 are spaced apart from one another.

Because the first and second ball check valves 112, 114 are in the seated position in FIGURE 5A, the first longitudinal axis 306 is coincident with the first central axis 308; and the second longitudinal axis 310 is coincident with the second central axis 312. In FIGURE 5A, the longitudinal axes 306, 310 and the central axes 308, 312 go into and out of the page. In FIGURE 5A, the longitudinal axes 306, 310 are each illustrated as an "X," whereas the central axes 308, 312 are each illustrated as a white circle. In some implementations, in the seated position, the finger structures 502, 504, 506, 508, 216, 240 are configured to be spaced about 0.25 inches to about 0.5 inches from the first and second balls 204, 238 such that when in the unseated position, fluids with solids in them can still travel around the first and second balls 204, 238.

FIGURE 5B illustrates a cross-sectional view 500B of the first and second ball check valves 112, 114. Fluid flows into the page in FIGURE 5B. In some implementations, the cross-sectional view 500B corresponds with cross-section line CC' of FIGURE 3B. Thus, the first and second balls 204, 238 in FIGURE 5B are in the unseated position. As such, the first and second balls 204, 238 are each laterally shifted closer to the pump exit outlet 250. Further, in the unseated positions, the first central axis 308 is offset from the first longitudinal axis 306, and the second central axis 312 is offset from the second longitudinal axis 310.

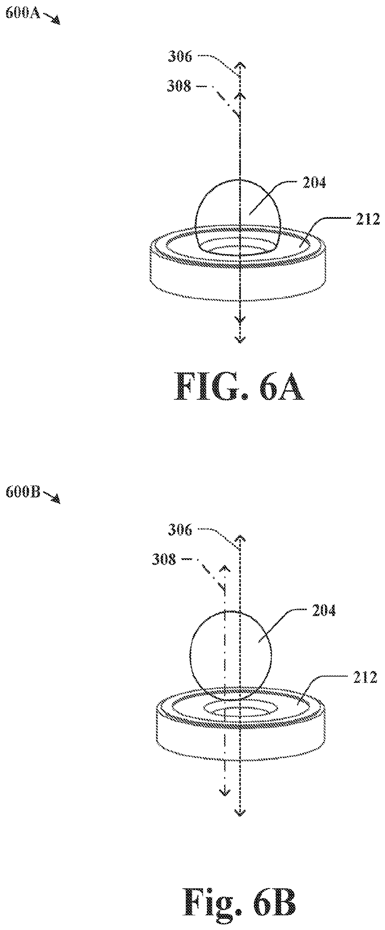

FIGURE 6A illustrates a perspective view 600A of some implementations of the first sealing ring 212 and first ball 204. In FIGURE 6A, the first ball 204 is in the seated position and thus, forms a seal with an inner opening of the first sealing ring 212. In the seated position, the first longitudinal axis 306 is coincident with the first central axis 308.

FIGURE 6B illustrates a perspective view 600B of some implementations of the first ball 204 in the unseated position with respect to the first sealing ring 212. In the seated position, the first longitudinal axis 306 is offset with the first central axis 308.

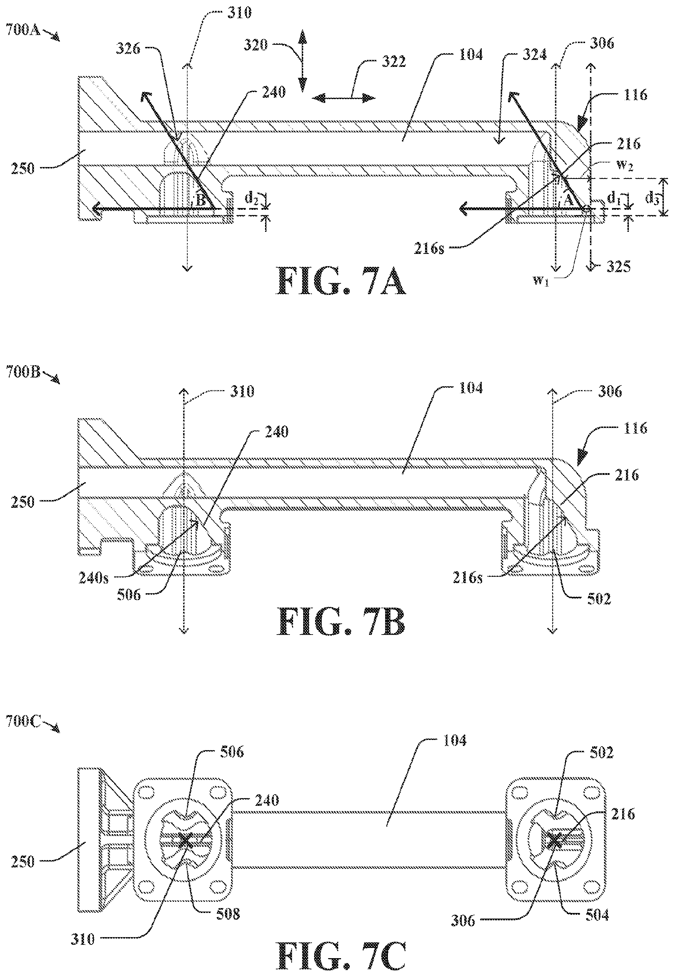

Figs. 7A, 7B, and 7C illustrate various views 700A, 700B, and 700C of the guidance finger structures 502, 504, 506, 508, 216, 240, the valve outlet portions 324, 326, the main outlet portion 104, and the pump exit outlet 250. In some implementations, these aforementioned features are formed from a same housing material. In some implementations, these aforementioned features are part of a same, monolithic structure.

As shown in FIGURE 7A, the first angled guidance finger structure 216 is arranged at a first angle A from the cross-sectional view 700A. The first angle A is measured along a set of axes running in the first and second directions 322, 320. The first angle A is an acute angle. In some implementations, the first angle A may be in a range of between, for example, approximately 40 degrees and approximately 65 degrees. For example, in some implementations, the first angle A may be equal to approximately 57 degrees. The first angle A of the first angled guidance finger structure 216 is designed to confine the first ball (*e.g.,* 204 of FIGURE 2) the first valve outlet portion 324 without entering the first valve outlet portion 324. Because of the first angle A of the first angled guidance finger structure 216, a distance between an outer sidewall 216s and the longitudinal axis 306 of FIGURE 3 decreases as the distance is measured away from the first sealing ring (*e.g.,* 212 of FIGURE 2).

Further, in some implementations, the first angled guidance finger structure 216 begins at a first distance d₁ above an upper surface the first sealing ring (*e.g.,* 212 of FIGURE 2). In some implementations, the first distance d₁ is about equal to 0.0625 inches. In some other implementations, the first distance d₁ is in a range of between about 0.05 inches and about 0.3 inches. Therefore, the first ball (*e.g.,* 204 of FIGURE 2) can be unseated in the first direction 320 and then follow the incline provided by the first angled guidance finger structure 216. Similarly, the first ball (*e.g.,* 204 of FIGURE 2) can be re-seated by following the decline provided by the first angled guidance finger structure 216 and the re-seat in the first direction 320 due to the first distance d₁.

The second angled guidance finger structure 240 is arranged at a second angle B from the cross-sectional view 700A. The second angle B is measured along a set of axes running in the first and second directions 322, 320. The second angle B is an acute angle. In some implementations, the second angle B may be in a range of between, for example, approximately 40 degrees and approximately 65 degrees. For example, in some implementations, the second angle B may be equal to approximately 57 degrees. The second angle B of the second angled guidance finger structure 240 is designed to confine the second ball *(e.g.,* 238 of FIGURE 2) to the second valve outlet portion 326 without entering the second valve outlet portion 326. The second angle B may be less than, equal to, or greater than the first angle A.

Further, in some implementations, the second angled guidance finger structure 240 begins at a second distance d₂ above an upper surface the second sealing ring *(e.g.,* 242 of FIGURE 2). In some implementations, the second distance d₂ is about equal to 0.0625 inches. In some other implementations, the second distance d₂ is in a range of between about 0.05 inches and about 0.3 inches. Therefore, the second ball *(e.g.,* 238 of FIGURE 2) can be unseated in the first direction 320 and then follow the incline provided by the second angled guidance finger structure 240. Similarly, the second ball *(e.g.,* 238 of FIGURE 2) can be re-seated by following the decline provided by the second angled guidance finger structure 240 and the re-seat in the first direction 320 due to the second distance d₂. The second distance d₂ may be less than, equal to, or greater than the first distance d₁.

FIGURE 7B illustrates a perspective view 700B of the structure of FIGURE 7A such that the first and third guidance finger structures 502, 506 are more visible. FIGURE 7C illustrates a bottom view 700C of the structure of FIGURE 7A to show the six guidance finger structures (502, 504, 506, 508, 216, 240) in this implementation.

As best seen when viewing FIGURES 7A, 7B, and 7C together, in some embodiments, the first angled guidance finger structure 216, the first guidance finger structure 502, and the second guidance finger structure 504 all protrude radially inward from housing of the upper elbow region 116 and towards the first longitudinal axis 306. The first angled guidance finger structure 216 is circumferentially spaced apart from the first guidance finger structure 502 and the second guidance finger structure 504. The first angled guidance finger structure 216 comprises a body that is operably connected the housing of the upper elbow region 116. The body of the first angled guidance finger structure 216 gradually protrudes radially inward towards the first longitudinal axis 306 and along the first angle A such that a distance between the outer sidewall 216s and the longitudinal axis 306 decreases as the distance is measured away from the first sealing ring (*e.g.,* 212 of FIGURE 2). Thus, because of the first angle A, a cross-section of the body of the first angled guidance finger structure 216, as shown in FIGURE 7A, has a width that increases as the width is measured away from the first sealing ring *(e.g.,* 212 of FIGURE 2), the width being measured in the second direction 322.

For example, the cross-section of the first angled guidance finger structure 216 has a first width w₁ measured at the first distance d₁ from the first sealing ring *(e.g.,* 212 of FIGURE 2) and has a second width w₂ measured at a second distance d₂ from the first sealing ring *(e.g.,* 212 of FIGURE 2), wherein the first and second distances dₗ, d₂ are measured in the first direction 320, wherein the first distance d₁ is less than the second distance d₂, and wherein the first width w₁ is less than the second width w₂. The first and second widths w₁, w₂ are each measured in the second direction 322 between the outer sidewall 216s of the first angled guidance finger structure 216 and a third longitudinal axis 325. In some embodiments, the third longitudinal axis 325 is parallel to the first longitudinal axis 306, and the first angled guidance finger structure is arranged between the first and third longitudinal axes 306, 325. Thus, the overall width of the first angled guidance finger structure 216 gradually increases as the width is measured at an increasing distance away from the first sealing ring *(e.g.,* 212 of FIGURE 2).

Similarly, in some embodiments, the second angled guidance finger structure 240, the third guidance finger structure 506, and the fourth guidance finger structure 508 all protrude radially inward from the housing of the second valve outlet portion 326 and towards the second longitudinal axis 310. The second angled guidance finger structure 240 is circumferentially spaced apart from the third guidance finger structure 506 and the fourth guidance finger structure 508. The second angled guidance finger structure 240 comprises a body that is operably connected to the housing of the second valve outlet portion 326. The body of the second angled guidance finger structure 240 gradually protrudes radially inward towards the second longitudinal axis 310 and along the second angle B such that a distance between an outer sidewall 240s and the longitudinal axis 310 of FIGURE 3 decreases as the distance is measured away from the second sealing ring *(e.g.,* 242 of FIGURE 2). As shown in FIGURE 7A, because of the second angle B, a cross-section of the body of the second angled guidance finger structure 240 has an overall width that gradually increases as the width is measured at an increasing distance away from the second sealing ring *(e.g.,* 242 of FIGURE 2). Like the overall width of the first angled guidance finger structure 216, the overall width of the second angled guidance finger structure 240 is also measured in the second direction 322. It will be appreciated that in other implementations, each ball check valve may have more or less than three guidance finger structures.

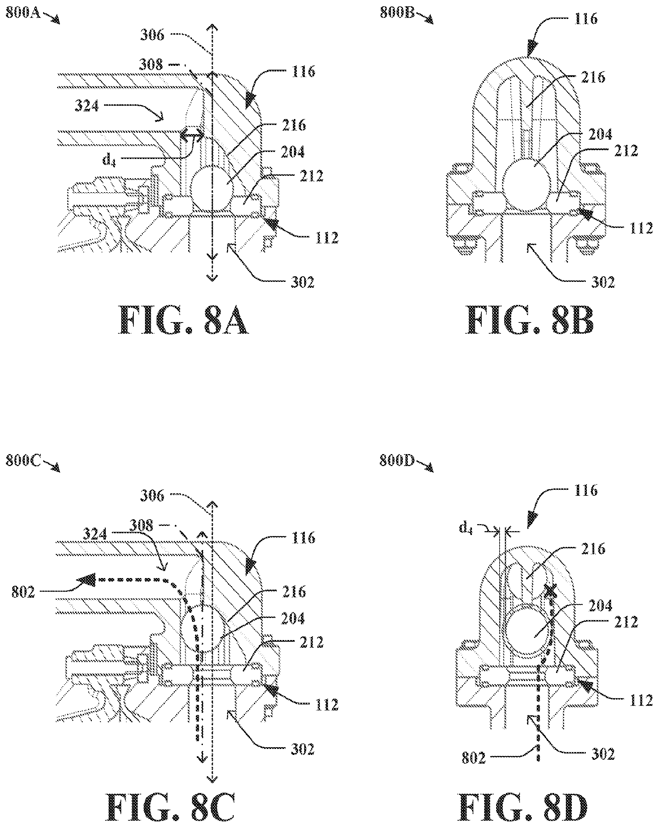

FIGURE 8A illustrates a cross-sectional view 800A of a magnified view of the first ball check valve 112 in the seated position. In some implementations, the first angled guidance finger structure 216 is configured such that a space between the first angled guidance finger structure 216 is spaced apart from the first valve outlet portion 324 by a fourth distance d₄. The fourth distance d₄ is less than the diameter of the first ball 204 such that the first ball 204 does not flow into the first valve outlet portion 324. In some implementations, the fourth distance d₄ is in a range of between, for example, approximately 0.5 inches and approximately 1 inch.

FIGURE 8B illustrates a cross-sectional view 800B of some implementations of the first ball check valve 112 in the seated position. In some implementations, the cross-sectional view 800B corresponds to a cross-section line coincident along the first longitudinal axis 306 of FIGURE 8A.

FIGS. 8C and 8D illustrates cross-sectional views 800C and 800D that respectively correspond to the cross-sectional views 800A and 800B except that the first ball check valve 112 is in the unseated position in FIGS. 78 and 8D.

With respect to FIGURE 8C, an exemplary fluid path 802 is illustrated with a dotted-line arrow. When the first ball check valve 112 is in the unseated position, the fluid can flow along the exemplary fluid path 802 from the first valve inlet portion 302 into the first valve outlet portion 324.

With respect to FIGURE 8D, the first ball 204 moves toward the page such that fluid can move along the exemplary fluid path 802 around surfaces of the first ball 204. The exemplary fluid path 802 flows out of the page in FIGURE 8D after passing around the first ball 204. In some implementations, portions of the first ball 204 are spaced apart from walls of the upper elbow region 116 by at least a fifth distance d₅. In some implementations, the fifth distance d₅ is in a range of between, for example, about 0.25 inches to about 0.5 inches such that when solids are in the fluid, the solids can still fit between the first ball 204 and the upper elbow region 116. In some implementations, the first ball 204 can swell during use because the first ball 204 due to the first ball 204 being slightly porous and/or due to thermal expansion. In some such implementations, the fifth distance d₅ needs to be large enough to still allow the passage of fluids and solids even if the first ball 204 swells.

Because the first angled guidance finger structure 216 controls the position of the first ball 204 such that jostling of the first ball 204 is mitigated, the first ball 204 does not sway in the lateral direction in FIGURE 8D and trap fluid and/or solids between the first ball 204 and housing of the upper elbow region 116. Thus, erosion of the first ball 204 and the housing of the upper elbow region 116 is reduced, thereby increasing the lifetime of the first ball 204 and the diaphragm pump. Further, with less jostling, noise produced by the first ball check valve 112 is reduced which improves working conditions by reducing hearing damage for pump operators.

Referring to FIGURE 9, in another implementation, the pump may comprise at least one lower elbow region 120. FIGURE 9 illustrates a magnified view of the pump at the lower elbow region 120, which may correspond to Box A of FIGURE 2, for example. The lower elbow region 120 may be defined by an inlet housing 111 with a main inlet portion 102. The inlet housing 111 may be one piece or comprise multiple pieces mechanically fastened together. While the pump is in operation, the inlet housing 111 may receive the fluid being pumped from the main inlet portion 102 and move it to either the first or second pumping chamber (e.g., 202, 232 of FIG. 2) in the corresponding first or second diaphragm chamber housing (e.g., 106, 108 of FIG. 2). Each lower elbow region 120 may comprise an elbow inlet passageway 126 defined by elbow inlet aperture 130 and an elbow outlet passageway 128 defined by elbow outlet aperture 132. The elbow inlet passageway 126 and the elbow outlet passageway 128 together define a fluid passageway of the lower elbow region 120. The elbow inlet aperture 130 may comprise a circular opening defined by an inlet aperture radius Rᵢ. The elbow outlet aperture 132 may comprise a circular opening defined by an outlet aperture radius Rₒ. The at least one lower elbow region 120 may be configured so that the outlet aperture radius Rₒ is greater than the inlet aperture radius Rᵢ.

Additionally, the elbow outlet passageway may 128 extend past the intersection with the elbow inlet passageway 126 and form an elbow inlet cavity 122. The elbow inlet cavity 122 may be spherical in shape with a radius substantially similar to the outlet aperture radius Rₒ. The configuration of the elbow outlet passageway 128 and the elbow outlet aperture 132 having a greater radius than the elbow inlet passageway 126 and elbow inlet aperture 130 may reduce fluid velocity as the fluid moves through the inlet housing 111. Because of its larger radius, the elbow inlet cavity 122 increases the cross-sectional area of the fluid passageway of the lower elbow region 120. Further, the elbow inlet cavity 122 extends below the elbow inlet passageway 126 such that a bottommost portion 122p of the elbow inlet cavity 122 is below a bottommost surface 126b of the elbow inlet passageway 126. The elbow inlet passageway 126 has a centerline 125 that extends in a horizontal direction through a center of a circular cross-section of the elbow inlet passageway 126. The elbow inlet internal cavity 122 has a centerline 123 that extends in the horizontal direction and through a center of the elbow inlet cavity 122, wherein the center of the elbow inlet cavity 122 is arranged above the bottommost portion 122p by a distance equal to the outlet aperture radius R₀. The centerline 123 of the elbow inlet cavity 122 is parallel with the centerline 125 of the elbow inlet passageway 126 is also arranged below and offset from the centerline 125 of the elbow inlet passageway 126.

The larger lower elbow region 120, which has a centerline 123 vertically offset from the centerline 125 of the elbow inlet passageway 126, allows fluid to circulate within the elbow inlet cavity 122. This circulating fluid may dislodge and remove any debris within the elbow inlet cavity 122 while cavitation is also reduced due to a reduced fluid velocity within the elbow inlet cavity 122. This reduction of fluid velocity due to the change in Rₒ and Rᵢ may also reduce the production of cavitation and thereby improve the durability and efficiency of the pump.

It will be appreciated that the lower elbow region 120 described with respect to FIGURE 9 and the angled guidance finger structure (e.g., 216, 240 of FIG. 3A) may be mutually exclusive of one another. For example, in some implementations, a pump may comprise the elbow inlet cavity 122 at the lower elbow region 120 described in FIGURE 9 and may not comprise the angled guidance finger structure (e.g., 216, 240 of FIG. 3A). In some other implementations, a pump may comprise one or more angled guidance finger structures (e.g., 216, 240 of FIG. 3A) and may not comprise the elbow inlet cavity 122 at the lower elbow region 120. In yet some other implementations, a pump may comprise both the elbow inlet cavity 122 at the lower elbow region 120 and the angled guidance finger structure (e.g., 216, 240 of FIG. 3A) to achieve reduced cavitation and debris at the lower elbow region 120 and reduced noise and equipment erosion at the angled guidance finger structure (e.g., 216, 240 of FIG. 3A). It will also be appreciated that the lower elbow region 120 may be implemented in other types of pumps and/or with other types of valves such as flap valves or the like. Similarly, the angled guidance finger structures (e.g., 216, 240 of FIG. 3A) may be implemented with other types of pumps.

Referring again to FIGURE 4, the pump comprises both the lower elbow region 120 substantially described in FIGURE 9 and the angled guidance finger structures 216, 240 substantially described in FIGURES 3A-8D. In FIGURE 4, the first lower ball check valve 254 is in the seated position, the first ball check valve 112 is in the unseated position, the second lower ball check valve 252 is in the unseated position, and the second ball check valve 114 is in the seated position. A first lower elbow region 120a is arranged below the first lower ball check valve 254, and a second lower elbow region 120b is arranged below the second lower ball check valve 252, wherein the first and second lower elbow regions 120a, 120b respectively comprise first and second elbow inlet cavities 122a, 122b.

During operation of the pump, when the second lower ball check valve 252 is in the unseated position, fluid flows into the pump via the pump entry inlet 248, flows through the main inlet portion 102 towards the second lower ball check valve 252, and into the second pumping chamber 232. As the fluid passes the second lower elbow region 120b between the pump entry inlet 248 and the second lower ball check valve 252, fluid circulates within the second elbow inlet cavity 122b to reduce cavitation and also to dislodge and remove any debris at the second lower elbow region 120b. As the fluid fills the second pumping chamber 232, the second diaphragm plate 234 may compress the second pumping chamber 232 due to pressure from air filling the second diaphragm chamber 224. The second lower ball check valve 252 is then forced closed and the second ball check valve 114 is forced into the open position for the fluid to flow out of the second pumping chamber 232, past the second ball check valve 114, and out of the pump exit outlet 250 via the second valve outlet portion 326.

When the second ball 238 at the second ball check valve 114 unseats into the open position, the second ball 238 is configured to be off-center from the ball of the second lower ball check valve 252 due to the second angled guidance finger structure 240, which reduces erosion to the second ball check valve 114, reduces time for the second ball check valve 114 to switch between the seated position and the unseated position, and reduces noise pollution produced by the second ball check valve 114. The offset second ball 238 also improves the fluid flow behavior predictability. For example, the offset second ball 238 reduces drag on the fluid and increases pressure above the second ball 238 such that the second ball 238 can seat and unseat faster.

As the second lower ball check valve 252 is forced into the closed position and the second ball check valve 114 is forced into the open position, the first lower ball check valve 254 is forced into the open position and the first ball check valve 112 is forced into the closed position. Thus, as the fluid is being pumped out of the second pumping chamber 232, additional fluid enters the first pumping chamber 202 via the pump entry inlet 248 and the main inlet portion 102. Due to the first lower elbow region 120a, cavitation and debris at the first lower elbow region 120a are reduced. As fluid flows into the first pumping chamber 202, the first diaphragm chamber 222 fills with air and forces the first ball check valve 112 into the open position and the first lower ball check valve 254 into the closed position. Thus, fluid is then forced out of the first pumping chamber 202, past the first angled guidance finger structure 216 at the first ball check valve 112, and out of the pump exit outlet 250 via the first valve outlet portion 324.

When the first ball 204 of the first ball check valve 112 unseats into the open position, the first ball 204 is configured to be off-center from the ball of the first lower ball check valve 254 due to the first angled guidance finger structure 216, which reduces erosion to the first ball check valve 112, reduces time for the first ball check valve 112 to switch between the seated position and the unseated position, and reduces noise pollution produced by the first ball check valve 112. The offset first ball 204 also improves the fluid flow behavior predictability. For example, the offset first ball 204 reduces drag on the fluid and increases pressure above the first ball 204 such that the first ball 204 can seat and unseat faster.

The first and second pumping chambers 202, 232 continue to shift between suction and discharge stages as air is shifted between the first and second diaphragm chambers 222, 224 to continuously pump fluid between the pump entry inlet 248 and the pump exit outlet 250. Because of the first and second lower elbow regions 120a, 120b and because of the first and second angled guidance finger structures 216, 240, fluid flow throughout the pump is improved, noise from the pump is reduced, and longevity of the pump is increased.

The word "exemplary" is used herein to mean serving as an example, instance or illustration. Any aspect or design described herein as "exemplary" is not necessarily to be construed as advantageous over other aspects or designs. Rather, use of the word exemplary is intended to present concepts in a concrete fashion. As used in this application, the term "or" is intended to mean an inclusive "or" rather than an exclusive "or." That is, unless specified otherwise, or clear from context, "X employs A or B" is intended to mean any of the natural inclusive permutations. That is, if X employs A; X employs B; or X employs both A and B, then "X employs A or B" is satisfied under any of the foregoing instances. Further, at least one of A and B and/or the like generally means A or B or both A and B. In addition, the articles "a" and "an" as used in this application and the appended claims may generally be construed to mean "one or more" unless specified otherwise or clear from context to be directed to a singular form.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims. Of course, those skilled in the art will recognize many modifications may be made to this configuration without departing from the scope of the claimed subject matter.

Also, although the disclosure has been shown and described with respect to one or more implementations, equivalent alterations and modifications will occur to others skilled in the art based upon a reading and understanding of this specification and the annexed drawings. The disclosure includes all such modifications and alterations and is limited only by the scope of the following claims. In particular regard to the various functions performed by the above described components (e.g., elements, resources, etc.), the terms used to describe such components are intended to correspond, unless otherwise indicated, to any component which performs the specified function of the described component (e.g., that is functionally equivalent), even though not structurally equivalent to the disclosed structure which performs the function in the herein illustrated exemplary implementations of the disclosure.

In addition, while a particular feature of the disclosure may have been disclosed with respect to only one of several implementations, such feature may be combined with one or more other features of the other implementations as may be desired and advantageous for any given or particular application. Furthermore, to the extent that the terms "includes," "having," "has," "with," or variants thereof are used in either the detailed description or the claims, such terms are intended to be inclusive in a manner similar to the term "comprising."

The implementations have been described, hereinabove. It will be apparent to those skilled in the art that the above methods and apparatuses may incorporate changes and modifications without departing from the general scope of this invention. It is intended to include all such modifications and alterations in so far as they come within the scope of the appended claims.

## Claims

1. A pump comprising:
an inlet (102);
an outlet (104);
at least one pumping chamber (202) defined by a pumping chamber housing (106) and a diaphragm (208), the pumping chamber (202) further comprising a pumping chamber inlet and a pumping chamber outlet; and
at least one inlet elbow (120), the inlet elbow (120) comprising a fluid passageway, wherein the fluid passageway comprises an elbow inlet passageway (126) defined by an inlet aperture (130) in fluid communication with the inlet (102) and an elbow outlet passageway (128) defined by an outlet aperture (132) in fluid communication with the pumping chamber inlet, and wherein the inlet elbow (120) further comprises an elbow inlet cavity (122), the elbow inlet cavity (122) extending below the elbow inlet passageway (126) such that a bottommost portion (122p) of the elbow inlet cavity (122) is below a bottommost surface (126b) of the elbow inlet passageway (126).

2. The pump of claim 1, wherein the inlet aperture (130) has a radius of Rᵢ and the outlet aperture (132) has a radius Rₒ, and wherein Rₒ is greater than Rᵢ, and wherein the change in Rₒ and Rᵢ is configured to decrease the velocity of the fluid moving through the inlet elbow (120).

3. The pump of claim 1, wherein the elbow inlet cavity (122) is configured to increase the cross-sectional area of the fluid passageway of the inlet elbow (120).

4. The pump of claim 1, wherein the elbow inlet passageway (126) comprises a centerline (125) extending in a horizontal direction (322) through a center of a circular cross-section of the elbow inlet passageway (126), wherein the elbow inlet cavity (122) comprises a centerline (123) extending in the horizontal direction (322) and through a center of the elbow inlet cavity (122), and wherein the center of the elbow inlet cavity (122) is disposed above the bottommost portion (122p) by a distance equal to a radius, Rₒ, of the outlet aperture (132).

5. The pump of claim 4, wherein the centerline (123) of the elbow inlet cavity (122) is parallel with the centerline (125) of the elbow inlet passageway (126) and disposed below and offset from the centerline (125) of the elbow inlet passageway (122).

6. The pump of claim 4, wherein the centerline (123) of the elbow inlet cavity (122) is vertically offset from the centerline (125) of the elbow inlet passageway (126).

7. The pump of claim 1, further comprising:
a valve inlet portion (302) disposed proximate the outlet aperture (132) and comprising a longitudinal axis (306) extending in a first direction (320);
a valve outlet portion (324) coupled to the valve inlet portion (302); and
a ball check valve (112) arranged between the valve inlet portion (302) and the valve outlet portion (324), wherein the ball check valve (112) comprises:
a sealing ring (212) arranged over the valve inlet portion (302), wherein the sealing ring (212) has an inner diameter smaller than an inner diameter of the valve inlet portion (302); and
a ball (204) arranged over the sealing ring (212), wherein a diameter of the ball (204) is greater than the inner diameter of the sealing ring (212),
wherein the ball (204) is configured to move between a seated position to prevent fluid flow between the valve inlet (302) and valve outlet portions (324) and an unseated position to allow fluid flow between the valve inlet (302) and valve outlet portions (324), wherein a central axis (308) of the ball (204) extends through a center of the ball (204) and in the first direction (320), wherein the central axis (308) is coincident with the longitudinal axis (306) when the ball (204) is in the seated position, and wherein the central axis (308) is offset from the longitudinal axis (306) when the ball (204) is in the unseated position.

8. The pump of claim 7, wherein the ball check valve (112) further comprises a guidance finger structure (216) arranged above the sealing ring (212) and configured to confine the ball (204) to a ball check valve region arranged between the valve inlet (302) and valve outlet portions (324), wherein the guidance finger structure (216) protrudes towards the longitudinal axis (306) from an inner sidewall of the ball check valve region.

9. The pump of claim 8, wherein the guidance finger structure (216) is configured to guide the central axis (308) of the ball (204) to be offset from the longitudinal axis (306) when the ball (204) is in the unseated position.

10. The pump of claim 9, wherein the guidance finger structure (216) has an outer sidewall (216s) that is arranged at an angle (A) such that a distance between the outer sidewall (216s) and the longitudinal axis (306) decreases as the distance is measured away from the sealing ring (212).

11. The pump of claim 1, wherein the at least one inlet elbow (120) is arranged proximate the pumping chamber inlet, and wherein an upper outlet elbow (116) is arranged proximate the pumping chamber outlet such that the at least one pumping chamber (202) is arranged between the at least one inlet elbow (120) and the upper outlet elbow (116), the upper outlet elbow (116) comprising a ball check valve (112).

12. The pump of claim 11, wherein the ball check valve (112) comprises an angled guidance finger structure (216) protruding radially inward from a housing of the upper outlet elbow (116).

13. The pump of claim 12, wherein the ball check valve (112) further comprises a ball (204) configured to move between a seated position to prevent fluid flow between valve inlet (302) and valve outlet portions (324) and an unseated position to allow fluid flow between the valve inlet (302) and valve outlet portions (324), wherein a central axis (308) of the ball (204) extends through a center of the ball (204) and in a vertical direction (320), wherein the central axis (308) is coincident with a longitudinal axis (306) of the valve inlet portion (302) when the ball (204) is in the seated position, and wherein the central axis (308) is offset from the longitudinal axis (306) when the ball (204) is in the unseated position.

14. The pump of claim 13, wherein the angled guidance finger structure (216) is configured to guide the central axis (308) of the ball (204) to be offset from the longitudinal axis (306) when the ball (204) is in the unseated position.

## Patentansprüche

1. Pumpe, umfassend:
einen Einlass (102);
einen Auslass (104);
mindestens eine Pumpenkammer (202), die durch ein Pumpenkammergehäuse (106) und eine Membran (208) definiert ist, wobei die Pumpenkammer (202) ferner einen Pumpenkammereinlass und einen Pumpenkammerauslass umfasst; und
mindestens einen Einlassbogen (120), wobei der Einlassbogen (120) einen Fluiddurchgang umfasst, wobei der Fluiddurchgang einen bogenförmigen Einlassdurchgang (126) umfasst, der durch eine Einlassöffnung (130) definiert ist, die in Fluidverbindung mit dem Einlass (102) steht, sowie einen bogenförmigen Auslassdurchgang (128), der durch eine Auslassöffnung (132) definiert ist, die in Fluidverbindung mit dem Pumpenkammereinlass steht, und wobei der Einlassbogen (120) ferner einen bogenförmigen Einlasshohlraum (122) umfasst, wobei sich der bogenförmige Einlasshohlraum (122) unterhalb des bogenförmigen Einlassdurchgangs (126) erstreckt, sodass sich ein unterster Abschnitt (122p) des bogenförmigen Einlasshohlraums (122) unterhalb einer untersten Oberfläche (126b) des bogenförmigen Einlassdurchgangs (126) befindet.

2. Pumpe nach Anspruch 1, wobei die Einlassöffnung (130) einen Radius Rᵢ und die Auslassöffnung (132) einen Radius Rₒ aufweist und wobei Rₒ größer ist als Rᵢ und wobei die Änderung von Rₒ und Rᵢ dafür ausgelegt ist, die Geschwindigkeit des durch den Einlassbogen (120) strömenden Fluids zu verringern.

3. Pumpe nach Anspruch 1, wobei der bogenförmige Einlasshohlraum (122) dafür ausgelegt ist, die Querschnittsfläche des Fluiddurchgangs des Einlassbogens (120) zu vergrößern.

4. Pumpe nach Anspruch 1, wobei der bogenförmige Einlassdurchgang (126) eine Mittellinie (125) umfasst, die sich in horizontaler Richtung (322) durch einen Mittelpunkt eines kreisförmigen Querschnitts des bogenförmigen Einlassdurchgangs (126) erstreckt, wobei der bogenförmige Einlasshohlraum (122) eine Mittellinie (123) umfasst, die sich in horizontaler Richtung (322) und durch einen Mittelpunkt des bogenförmigen Einlasshohlraums (122) erstreckt, und wobei der Mittelpunkt des bogenförmigen Einlasshohlraums (122) um einen Abstand, der dem Radius Rₒ der Auslassöffnung (132) entspricht, über dem untersten Abschnitt (122p) angeordnet ist.

5. Pumpe nach Anspruch 4, wobei die Mittellinie (123) des bogenförmigen Einlasshohlraums (122) parallel zur Mittellinie (125) des bogenförmigen Einlassdurchgangs (126) verläuft und unterhalb der Mittellinie (125) des bogenförmigen Einlassdurchgangs (122) sowie versetzt zu dieser angeordnet ist.

6. Pumpe nach Anspruch 4, wobei die Mittellinie (123) des bogenförmigen Einlasshohlraums (122) gegenüber der Mittellinie (125) des bogenförmigen Einlassdurchgangs (126) vertikal versetzt ist.

7. Pumpe nach Anspruch 1, ferner umfassend:
einen Ventileinlassabschnitt (302), der in der Nähe der Auslassöffnung (132) angeordnet ist und eine Längsachse (306) umfasst, die sich in einer ersten Richtung (320) erstreckt;
einen Ventilauslassabschnitt (324), der mit dem Ventileinlassabschnitt (302) gekoppelt ist; und
ein Kugelrückschlagventil (112), das zwischen dem Ventileinlassabschnitt (302) und dem Ventilauslassabschnitt (324) angeordnet ist, wobei das Kugelrückschlagventil (112) umfasst:
einen über dem Ventileinlassabschnitt (302) angeordneten Dichtungsring (212), wobei der Dichtungsring (212) einen Innendurchmesser aufweist, der kleiner ist als ein Innendurchmesser des Ventileinlassabschnitts (302); und
eine Kugel (204), die über dem Dichtungsring (212) angeordnet ist, wobei der Durchmesser der Kugel (204) größer ist als der Innendurchmesser des Dichtungsrings (212),
wobei die Kugel (204) dafür ausgelegt ist, sich zwischen einer aufliegenden Stellung, um einen Fluidstrom zwischen dem Ventileinlass- (302) und dem Ventilauslassabschnitt (324) zu verhindern, und einer abgehobenen Stellung zu bewegen, um einen Fluidstrom zwischen dem Ventileinlass- (302) und dem Ventilauslassabschnitt (324) zu ermöglichen, wobei eine Mittelachse (308) der Kugel (204) durch einen Mittelpunkt der Kugel (204) und in der ersten Richtung (320) verläuft, wobei die Mittelachse (308) mit der Längsachse (306) zusammenfällt, wenn sich die Kugel (204) in der aufliegenden Stellung befindet, und wobei die Mittelachse (308) gegenüber der Längsachse (306) versetzt ist, wenn sich die Kugel (204) in der abgehobenen Stellung befindet.

8. Pumpe nach Anspruch 7, wobei das Kugelrückschlagventil (112) ferner eine oberhalb des Dichtungsrings (212) angeordnete Führungsfingerstruktur (216) umfasst, die dafür ausgelegt ist, die Kugel (204) in einem Kugelrückschlagventilbereich zu halten, der zwischen dem Ventileinlass- (302) und dem Ventilauslassabschnitt (324) angeordnet ist, wobei die Führungsfingerstruktur (216) von einer inneren Seitenwand des Kugelrückschlagventilbereichs in Richtung der Längsachse (306) vorsteht.

9. Pumpe nach Anspruch 8, wobei die Führungsfingerstruktur (216) dafür ausgelegt ist, die Mittelachse (308) der Kugel (204) so zu führen, dass sie gegenüber der Längsachse (306) versetzt ist, wenn sich die Kugel (204) in der abgehobenen Stellung befindet.

10. Pumpe nach Anspruch 9, wobei die Führungsfingerstruktur (216) eine äußere Seitenwand (216s) aufweist, die in einem Winkel (A) angeordnet ist, sodass ein Abstand zwischen der äußeren Seitenwand (216s) und der Längsachse (306) abnimmt, je weiter der Abstand vom Dichtungsring (212) gemessen wird.

11. Pumpe nach Anspruch 1, wobei der mindestens eine Einlassbogen (120) in der Nähe des Pumpenkammereinlasses angeordnet ist und wobei ein oberer Auslassbogen (116) in der Nähe des Pumpenkammerauslasses so angeordnet ist, dass die mindestens eine Pumpenkammer (202) zwischen dem mindestens einen Einlassbogen (120) und dem oberen Auslassbogen (116) angeordnet ist, wobei der obere Auslassbogen (116) ein Kugelrückschlagventil (112) umfasst.

12. Pumpe nach Anspruch 11, wobei das Kugelrückschlagventil (112) eine abgewinkelte Führungsfingerstruktur (216) umfasst, die von einem Gehäuse des oberen Auslassbogens (116) radial nach innen vorsteht.

13. Pumpe nach Anspruch 12, wobei das Kugelrückschlagventil (112) ferner eine Kugel (204) umfasst, die dafür ausgelegt ist, sich zwischen einer aufliegenden Stellung, um einen Fluidstrom zwischen dem Ventileinlass- (302) und dem Ventilauslassabschnitt (324) zu verhindern, und einer abgehobenen Stellung zu bewegen, um einen Fluidstrom zwischen dem Ventileinlass- (302) und dem Ventilauslassabschnitt (324) zu ermöglichen, wobei eine Mittelachse (308) der Kugel (204) durch einen Mittelpunkt der Kugel (204) und in einer vertikalen Richtung (320) verläuft, wobei die Mittelachse (308) mit einer Längsachse (306) des Ventileinlassabschnitts (302) zusammenfällt, wenn sich die Kugel (204) in der aufliegenden Stellung befindet, und wobei die Mittelachse (308) gegenüber der Längsachse (306) versetzt ist, wenn sich die Kugel (204) in der abgehobenen Stellung befindet.

14. Pumpe nach Anspruch 13, wobei die angewinkelte Führungsfingerstruktur (216) dafür ausgelegt ist, die Mittelachse (308) der Kugel (204) so zu führen, dass sie gegenüber der Längsachse (306) versetzt ist, wenn sich die Kugel (204) in der abgehobenen Stellung befindet.

## Revendications

1. Pompe comprenant :
une entrée (102) ;
une sortie (104) ;
au moins une chambre de pompage (202) définie par un logement de chambre de pompage (106) et un diaphragme (208), la chambre de pompage (202) comprenant en outre une entrée de chambre de pompage et une sortie de chambre de pompage ; et
au moins un coude d'entrée (120), le coude d'entrée (120) comprenant une voie de passage de fluide, dans laquelle la voie de passage de fluide comprend une voie de passage d'entrée de coude (126) définie par une ouverture d'entrée (130) en communication fluidique avec l'entrée (102) et une voie de passage de sortie de coude (128) définie par une ouverture de sortie (132) en communication fluidique avec l'entrée de chambre de pompage, et dans laquelle le coude d'entrée (120) comprend en outre une cavité d'entrée de coude (122), la cavité d'entrée de coude (122) s'étendant au-dessous de la voie de passage d'entrée de coude (126) de sorte qu'une partie la plus inférieure (122p) de la cavité d'entrée de coude (122) est au-dessous d'une surface la plus inférieure (126b) de la voie de passage d'entrée de coude (126).

2. Pompe selon la revendication 1, dans laquelle l'ouverture d'entrée (130) a un rayon Rᵢ et l'ouverture de sortie (132) a un rayon Rₒ, et dans laquelle Rₒ est supérieur à Rᵢ, et dans laquelle le changement de Rₒ et de Rᵢ est configuré pour diminuer la vélocité du fluide se déplaçant à travers le coude d'entrée (120).

3. Pompe selon la revendication 1, dans laquelle la cavité d'entrée de coude (122) est configurée pour augmenter l'aire de section transversale de la voie de passage de fluide du coude d'entrée (120).

4. Pompe selon la revendication 1, dans laquelle la voie de passage d'entrée de coude (126) comprend une ligne centrale (125) s'étendant dans une direction horizontale (322) à travers un centre d'une section transversale circulaire de la voie de passage d'entrée de coude (126), dans laquelle la cavité d'entrée de coude (122) comprend une ligne centrale (123) s'étendant dans la direction horizontale (322) et à travers un centre de la cavité d'entrée de coude (122), et dans laquelle le centre de la cavité d'entrée de coude (122) est disposé au-dessus de la partie la plus inférieure (122p) à une distance égale à un rayon, Rₒ, de l'ouverture de sortie (132).

5. Pompe selon la revendication 4, dans laquelle la ligne centrale (123) de la cavité d'entrée de coude (122) est parallèle à la ligne centrale (125) de la voie de passage d'entrée de coude (126) et disposée au-dessous et décalée par rapport à la ligne centrale (125) de la voie de passage d'entrée de coude (122).

6. Pompe selon la revendication 4, dans laquelle la ligne centrale (123) de la cavité d'entrée de coude (122) est décalée verticalement par rapport à la ligne centrale (125) de la voie de passage d'entrée de coude (126).

7. Pompe selon la revendication 1, comprenant en outre :
une partie d'entrée de valve (302) disposée à proximité de l'ouverture de sortie (132) et comprenant un axe longitudinal (306) s'étendant dans une première direction (320) ;
une partie de sortie de valve (324) couplée à la partie d'entrée de valve (302) ; et
une valve anti-retour à bille (112) agencée entre la partie d'entrée de valve (302) et la partie de sortie de valve (324), dans laquelle la valve anti-retour à bille (112) comprend :
une bague d'étanchéité (212) agencée sur la partie d'entrée de valve (302), dans laquelle la bague d'étanchéité (212) a un diamètre interne inférieur à un diamètre interne de la partie d'entrée de valve (302) ; et
une bille (204) agencée sur la bague d'étanchéité (212), dans laquelle un diamètre de la bille (204) est supérieur au diamètre interne de la bague d'étanchéité (212),
dans laquelle la bille (204) est configurée pour se déplacer entre une position assise pour empêcher un fluide de s'écouler entre les parties d'entrée de valve (302) et de sortie de valve (324) et une position non assise pour permettre à un fluide de s'écouler entre les parties d'entrée de valve (302) et de sortie de valve (324), dans laquelle un axe central (308) de la bille (204) s'étend à travers un centre de la bille (204) et dans la première direction (320), dans laquelle l'axe central (308) coïncide avec l'axe longitudinal (306) lorsque la bille (204) est dans la position assise, et dans laquelle l'axe central (308) est décalé par rapport à l'axe longitudinal (306) lorsque la bille (204) est dans la position non assise.

8. Pompe selon la revendication 7, dans laquelle la valve anti-retour à bille (112) comprend en outre une structure de doigt de guidage (216) agencée au-dessus de la bague d'étanchéité (212) et configurée pour confiner la bille (204) dans une région de valve anti-retour à bille agencée entre les parties d'entrée de valve (302) et de sortie de valve (324), dans laquelle la structure de doigt de guidage (216) fait saillie vers l'axe longitudinal (306) depuis une paroi latérale interne de la région de valve anti-retour à bille.

9. Pompe selon la revendication 8, dans laquelle la structure de doigt de guidage (216) est configurée pour guider l'axe central (308) de la bille (204) pour qu'il soit décalé par rapport à l'axe longitudinal (306) lorsque la bille (204) est dans la position non assise.

10. Pompe selon la revendication 9, dans laquelle la structure de doigt de guidage (216) a une paroi latérale externe (216s) qui est agencée à un angle (A) de sorte qu'une distance entre la paroi latérale externe (216s) et l'axe longitudinal (306) diminue lorsque la distance est mesurée à l'écart de la bague d'étanchéité (212).

11. Pompe selon la revendication 1, dans laquelle l'au moins un coude d'entrée (120) est agencé à proximité de l'entrée de chambre de pompage, et dans laquelle un coude de sortie supérieur (116) est agencé à proximité de la sortie de chambre de pompage de sorte que l'au moins une chambre de pompage (202) est agencée entre l'au moins un coude d'entrée (120) et le coude de sortie supérieur (116), le coude de sortie supérieur (116) comprenant une valve anti-retour à bille (112).

12. Pompe selon la revendication 11, dans laquelle la valve anti-retour à bille (112) comprend une structure de doigt de guidage angulaire (216) faisant saillie de manière radiale vers l'intérieur depuis un logement du coude de sortie supérieur (116).

13. Pompe selon la revendication 12, dans laquelle la valve anti-retour à bille (112) comprend en outre une bille (204) configurée pour se déplacer entre une position assise pour empêcher un fluide de s'écouler entre les parties d'entrée de valve (302) et de sortie de valve (324) et une position non assise pour permettre à un fluide de s'écouler entre les parties d'entrée de valve (302) et de sortie de valve (324), dans laquelle un axe central (308) de la bille (204) s'étend à travers un centre de la bille (204) et dans une direction verticale (320), dans laquelle l'axe central (308) coïncide avec un axe longitudinal (306) de la partie d'entrée de valve (302) lorsque la bille (204) est dans la position assise, et dans laquelle l'axe central (308) est décalé par rapport à l'axe longitudinal (306) lorsque la bille (204) est dans la position non assise.

14. Pompe selon la revendication 13, dans laquelle la structure de doigt de guidage angulaire (216) est configurée pour guider l'axe central (308) de la bille (204) pour qu'il soit décalé par rapport à l'axe longitudinal (306) lorsque la bille (204) est dans la position non assise.
